# EUROPÄISCHE PATENTSCHRIFT

(11) **EP 3 239 461 B1**
(45) Veröffentlichungstag und Bekanntmachung des Hinweises auf die Patenterteilung: **08.09.2021**
(21) Anmeldenummer: 16167366.0
(22) Anmeldetag: 27.04.2016
(51) Int. Cl.: F01D 5/16, F04D 29/66, F04D 29/32, F04D 29/54

(54) **TURBOMASCHINENSCHAUFELANORDNUNG**
TURBO MACHINE BLADE ASSEMBLY
ENSEMBLE DE PALE DE TURBOMACHINE

(43) Veröffentlichungstag der Anmeldung: 01.11.2017
(73) Patentinhaber: MTU Aero Engines AG, 80995 München (DE)
(72) Erfinder: Hartung, Andreas, 81829 München (DE); Schill, Manfred, 81827 München (DE)

(56) Entgegenhaltungen:
- EP-A1- 2 484 870
- EP-A2- 2 570 600
- None

## Beschreibung

### HINWEIS ZUR FÖRDERUNG

Die Arbeiten, die zu dieser Erfindung geführt haben, wurden gemäß der *Finanzhilfevereinbarung* Nr. CSJU-GAM-SAGE-2008-001 im Zuge des Siebten Rahmenprogramms der Europäischen Union (*FP7*/*2007-2013*) für Clean Sky Joint Technology Initiative gefördert.

### TECHNISCHES GEBIET

Die vorliegende Erfindung betrifft eine Turbomaschinenschaufelanordnung mit einer ersten Turbomaschinenschaufel und einer dieser benachbarten zweiten Turbomaschinenschaufel, eine Turbomaschinenstufe, insbesondere eine Verdichter- oder Turbinenstufe, mit der Turbomaschinenschaufelanordnung sowie eine Turbomaschine, insbesondere eine Gasturbine, mit der Turbomaschinenstufe.

### STAND DER TECHNIK

Die eigene europäische Patentanmeldung mit der Anmeldenummer 15190023.0 betrifft eine Turbomaschinenschaufelanordnung mit einer Turbomaschinenschaufel und einem Stimmkörperführungsgehäuse mit Hohlräumen, in denen Stimmkörper, die zum Stoßkontakt mit dem Stimmkörperführungsgehäuse vorgesehen sind, aufgenommen ist, wobei das Stimmkörperführungsgehäuse in einer Aussparung der Turbomaschinenschaufel angeordnet und durch ein Sicherungsblech befestigt ist.

Eine Turbomaschinenschaufelanordnung mit einem zwischen zwei Turbomaschinenschaufeln angeordneten Stimmkörperführungsgehäuse ist aus der eigenen EP 2 484 870 A1 bekannt.

### AUFGABE UND GEGENSTAND DER ERFINDUNG

Eine Aufgabe einer Ausführung der vorliegenden Erfindung ist es, eine Turbomaschine zu verbessern.

Diese Aufgabe wird durch eine Turbomaschinenschaufelanordnung mit den Merkmalen des Anspruchs 1 gelöst. Die Ansprüche 14, 15 stellen eine Turbomaschinenstufe mit einer oder mehreren hier beschriebenen Turbomaschinenschaufelanordnungen bzw. eine Turbomaschine mit einer oder mehreren hier beschriebenen Turbomaschinenstufen unter Schutz. Vorteilhafte Ausführungsformen der Erfindung sind Gegenstand der Unteransprüche.

### BESCHREIBUNG DER ERFINDUNG

Nach einer Ausführung der vorliegenden Erfindung weist eine Turbomaschinenschaufelanordnung eine erste Turbomaschinenschaufel und eine dieser, insbesondere in Umfangsrichtung und/oder Einbaulage, benachbarte bzw. an diese angrenzende zweite Turbomaschinenschaufel auf.

Richtungsangaben, insbesondere "axial" bzw. "Axialrichtung", "radial" bzw. "Radialrichtung" und "Umfangsrichtung", beziehen sich vorliegend insbesondere auf eine Einbaulage der Turbomaschinenschaufelanordnung bzw. Turbomaschinenstufe und/oder eine (Haupt- bzw. Rotations)Achse der Turbomaschine(nstufe). Entsprechend ist in einer Ausführung eine Axialrichtung parallel zur (Haupt- bzw. Rotations)Achse der Turbomaschine(nstufe), eine Radialrichtung senkrecht hierzu und eine Umfangsrichtung eine Umlauf- bzw. Rotationsrichtung um die (Haupt- bzw. Rotations)Achse bzw. Axialrichtung.

Die Turbomaschinenschaufeln sind in einer Ausführung insbesondere Lauf- oder auch Leitschaufeln für eine, insbesondere einer, Turbomaschinenstufe, insbesondere Verdichter- oder Turbinenstufe, für eine, insbesondere einer, Turbomaschine, insbesondere Gasturbine, insbesondere Flugtriebwerk-Gasturbine. In einer Weiterbildung sind die Turbomaschinenschaufeln, insbesondere zerstörungsfrei lösbar, insbesondere reib- und/oder formschlüssig, oder nicht zerstörungsfrei lösbar, insbesondere stoffschlüssig, an einem Gehäuse oder Rotor der Turbomaschine(nstufe) befestigbar, insbesondere befestigt, in einer Weiterbildung durch Schaufelfüße, die in einer Nut des Gehäuses bzw. Rotors angeordnet bzw. hierzu ausgebildet sind. In einer Ausführung sind die Turbomaschinenschaufeln urgeformt, insbesondere gegossen.

Nach einer Ausführung der vorliegenden Erfindung, welche alleine durch den anhängenden unabhängigen Anspruch 1 definiert ist, weist die Turbomaschinenschaufelanordnung wenigstens ein Stimmkörperführungsgehäuse mit einem oder mehreren Hohlräumen auf, wobei in dem bzw. einem oder mehreren der Hohlräume (jeweils) wenigstens ein Stimm- bzw. Impulskörper mit Bewegungsspiel zum Stoßkontakt mit dem Stimmkörperführungsgehäuse angeordnet sind.

Unter einem Stoßkontakt wird vorliegend insbesondere in fachüblicher Weise ein kurzzeitiger bzw. impulsartiger, insbesondere wenigstens im Wesentlichen vollständig elastischer, und/oder stochastischer bzw. regelloser Kontakt verstanden. Hierdurch kann ein neuartiges Konzept der Anmelderin zur Reduzierung von unerwünschten Schwingungen realisiert werden, welches im Wesentlichen nicht auf Reibungsdissipation, sondern einer Verstimmung von Eigenformen und -frequenzen durch Stöße der Stimmkörper basiert. Zu weiteren Details dieses Konzepts zur Verstimmung wird ergänzend auf die eigene WO 2012/095067 A1 Bezug genommen.

Nach einer Ausführung der vorliegenden Erfindung ist das Stimmkörperführungsgehäuse teilweise oder vollständig in einer, insbesondere stirnseitigen, Aussparung bzw. Vertiefung, insbesondere in einem stirnseitigen Rahmen, der ersten Turbomaschinenschaufel angeordnet, insbesondere aufgenommen, in einer Weiterbildung mit oder ohne, insbesondere translatorisches, Bewegungsspiel in einer oder mehreren Richtungen, insbesondere mit oder ohne, insbesondere translatorisches, Bewegungsspiel in Axialrichtung, mit oder ohne, insbesondere translatorisches, Bewegungsspiel in Radialrichtung, mit oder ohne, insbesondere translatorisches, Bewegungsspiel in Umfangsrichtung, mit oder ohne, insbesondere translatorisches, Bewegungsspiel in einer Einführ- bzw. Öffnungsrichtung in die bzw. der Aussparung und/oder mit oder ohne, insbesondere translatorisches, Bewegungsspiel senkrecht zur Einführrichtung. In einer Weiterbildung weist die Aussparung, insbesondere der Rahmen, wenigstens einen, insbesondere axialen, Schlitz auf.

Hierdurch kann in einer Ausführung ein vorteilhaftes Betriebsverhalten des Stimmkörperführungsgehäuses, insbesondere eine vorteilhafte Verstimmung von Eigenformen und -frequenzen, realisiert werden.

Nach einer Ausführung der vorliegenden Erfindung weist die zweite Turbomaschinenschaufel wenigstens eine nachfolgend ohne Beschränkung der Allgemeinheit als erste Rippe bezeichnete Rippe auf, die das in der Aussparung angeordnete Stimmkörperführungsgehäuse, insbesondere form- und/oder reibschlüssig, sichert, insbesondere mit oder ohne Bewegungsspiel festlegt, insbesondere ein Entfernen, insbesondere Herausziehen entgegen einer Einführ- bzw. Öffnungsrichtung in die bzw. der Aussparung aus der Aussparung, insbesondere form- und/oder reibschlüssig, verhindert, in einer Weiterbildung eine (Ver)Drehung des Stimmkörperführungsgehäuses in der Aussparung und/oder aus der Aussparung heraus begrenzt, bzw. hierzu eingerichtet ist bzw. verwendet wird, insbesondere der Aussparung bzw. dem darin angeordneten Stimmkörperführungsgehäuse in Umfangsrichtung gegenüberliegt bzw. benachbart ist und/oder diese(s) wenigstens teilweise übergreift.

Hierdurch kann das Stimmkörperführungsgehäuses in einer Ausführung vorteilhaft in der Aussparung gesichert werden, insbesondere ohne das in der eingangs genannten europäische Patentanmeldung 15190023.0 verwendete zusätzliche Sicherungsblech. Zusätzlich oder alternativ kann hierdurch in einer Ausführung die Aussparung vorteilhaft konturiert und/oder hergestellt werden, in einer Weiterbildung entformungsfreundlich, insbesondere ohne Hinterschneidungen. Insbesondere können hierdurch in einer Ausführung Herstellungs-, Montage- und/oder Demontageaufwand reduziert und/oder eine Übertragung von Schwingungen zwischen Stimmkörperführungsgehäuse und erster und zweiter Turbomaschinenschaufel verbessert und so ein vorteilhaftes Betriebsverhalten des Stimmkörperführungsgehäuses, insbesondere eine vorteilhafte Verstimmung von Eigenformen und -frequenzen, realisiert werden.

In einer Ausführung weist die zweite Turbomaschinenschaufel wenigstens eine nachfolgend ohne Beschränkung der Allgemeinheit als zweite Rippe bezeichnete (weitere) Rippe auf, die das in der Aussparung angeordnete Stimmkörperführungsgehäuse, insbesondere form- und/oder reibschlüssig, sichert, insbesondere mit oder ohne Bewegungsspiel festlegt, insbesondere ein Entfernen, insbesondere Herausziehen entgegen einer Einführ- bzw. Öffnungsrichtung in die bzw. der Aussparung aus der Aussparung, insbesondere form- und/oder reibschlüssig, verhindert, in einer Weiterbildung eine (Ver)Drehung des Stimmkörperführungsgehäuses in der Aussparung und/oder aus der Aussparung heraus, insbesondere in Zusammenwirken mit der ersten Rippen, begrenzt, bzw. hierzu eingerichtet ist bzw. verwendet wird, insbesondere der Aussparung bzw. dem darin angeordneten Stimmkörperführungsgehäuse in Umfangsrichtung gegenüberliegt bzw. benachbart ist und/oder diese(s) wenigstens teilweise übergreift.

Hierdurch kann das Stimmkörperführungsgehäuses in einer Ausführung noch besser, insbesondere robuster, in der Aussparung gesichert, insbesondere an unterschiedlichen Bereichen abgestützt werden.

In einer Ausführung ist die zweite Rippe gegen die erste Rippe geneigt bzw. abgewinkelt, wobei in einer Weiterbildung ein Winkel zwischen der ersten und zweiten Rippe wenigstens 45°, insbesondere wenigstens 60°, insbesondere wenigstens 80°, und/oder höchstens 135°, insbesondere höchstens 120°, insbesondere höchstens 100°, beträgt. Als Winkel zwischen zwei Rippen wird in einer Ausführung insbesondere ein Winkel zwischen zwei (insbesondere maximalen bzw. Haupt-)Erstreckungsrichtungen der Rippen oder, insbesondere gemittelten, Tangenten hieran bezeichnet.

Hierdurch kann das Stimmkörperführungsgehäuses in einer Ausführung noch besser in der Aussparung gesichert werden, insbesondere gegen Verdrehungen in unterschiedliche Richtungen.

In einer Ausführung beträgt ein Winkel zwischen der ersten Rippe und einer bzw. der Radial- oder Axialrichtung höchstens 30°, insbesondere höchstens 15°. Mit anderen Worten erstreckt sich die erste Rippe in einer Ausführung wenigstens abschnittsweise wenigstens im Wesentlichen in Radial- oder Axialrichtung, in einer Weiterbildung die zweite Rippe umgekehrt wenigstens abschnittsweise wenigstens im Wesentlichen in Axial- bzw. Radialrichtung.

Hierdurch kann das Stimmkörperführungsgehäuses in einer Ausführung noch besser in der Aussparung gesichert werden, insbesondere gegen Verdrehungen in unterschiedliche Richtungen.

In einer Ausführung ist die erste Rippe, wenigstens im Wesentlichen, gerade. Zusätzlich oder alternativ ist in einer Ausführung die zweite Rippe, wenigstens im Wesentlichen, gerade. Zusätzlich oder alternativ sind in einer Ausführung die erste und zweite Rippe miteinander verbunden oder voneinander beabstandet.

Durch gerade und/oder voneinander beabstandete Rippen kann in einer Ausführung Gewicht gespart und/oder eine vorteilhafte Abstützung des Stimmkörperführungsgehäuses realisiert werden.

In einer Ausführung ist die erste Rippe mit einem Stirnflansch der zweiten Turbomaschinenschaufel verbunden, insbesondere integral ausgebildet. Zusätzlich oder alternativ ist in einer Ausführung die zweite Rippe mit einem bzw. dem Stirnflansch der zweiten Turbomaschinenschaufel verbunden, insbesondere integral ausgebildet.

Hierdurch kann in einer Ausführung Gewicht und/oder Herstellungsaufwand gespart und/oder eine vorteilhafte Abstützung der Rippe(n) realisiert werden.

In einer Ausführung ist die Aussparung in einer schaufelfußseitigen Plattform und/oder auf einer (strömungstechnischen) Druckseite und/oder auf einer (strömungstechnischen) Austritts- bzw. Abströmseite der ersten Turbomaschinenschaufel angeordnet.

Hierdurch kann in einer Ausführung ein vorteilhaftes Betriebsverhalten des Stimmkörperführungsgehäuses, insbesondere eine vorteilhafte Verstimmung von Eigenformen und -frequenzen, realisiert werden.

In einer Ausführung weist das Stimmkörperführungsgehäuse zwei oder mehr Teile auf, die miteinander, insbesondere luftdicht und/oder stoffschlüssig, verbunden, insbesondere verlötet oder -schweißt, sind und den bzw. die Hohlräume definieren.

Durch ein mehrteiliges Stimmkörperführungsgehäuse kann in einer Ausführung das Platzieren von Stimmkörpern und/oder deren Stoßverhalten verbessert werden, durch luftdicht und/oder stoffschlüssig geschlossene Hohlräume insbesondere ein Stoßverhalten darin angeordneter Stimmkörpern. Insbesondere können diese in einer Ausführung dadurch gegen Umgebungsbedingungen, insbesondere Arbeitsfluide, der Turbomaschine(nschaufelanordnung) wenigstens teilweise geschützt werden.

In einer Ausführung sind der bzw. einer oder mehrere der Stimmkörper (jeweils) kugelförmig ausgebildet und/oder aus Metall, Al₂O₃ und/oder CrO₂ hergestellt.

Hierdurch kann ein vorteilhafter Stoßkontakt realisiert werden.

In einer Ausführung ist in dem bzw. einem oder mehreren der Hohlräume des Stimmkörperführungsgehäuses (jeweils) genau ein Stimmkörper angeordnet.

Hierdurch können vorteilhafte Einzelstoßkontakte realisiert werden.

Theoretisch ist es auch denkbar, zusätzlich oder alternativ in einer Ausführung in dem bzw. einem oder mehreren der Hohlräume (jeweils) zwei oder mehr Stimmkörper anzuordnen.

Hierdurch können auch Stoßkontakte zwischen Stimmkörpern realisiert werden.

In einer Ausführung sind der bzw. einer oder mehrere der Stimmkörper (jeweils) ungefesselt bzw. frei beweglich in einem Hohlraum angeordnet, der in einer Weiterbildung luftgefüllt sein kann.

Hierdurch kann ein vorteilhafter Stoßkontakt realisiert werden.

In einer Ausführung weisen der bzw. ein oder mehrere der Stimmkörper (jeweils) eine Masse auf, die wenigstens 0,01 Gramm (g), insbesondere wenigstens 0,02 g, und/oder höchstens 0,05 g, insbesondere höchstens 0,03 g, beträgt.

Zusätzlich oder alternativ weisen in einer Ausführung der bzw. ein oder mehrere der Stimmkörper (jeweils) einen, insbesondere minimalen oder maximalen, Durchmesser auf, der wenigstens 1 mm und/oder höchstens 5 mm beträgt, insbesondere bei 20°C. Zusätzlich oder alternativ beträgt in einer Ausführung das Bewegungsspiel des bzw. eines oder mehrerer der Stimmkörper(s jeweils) wenigstens 0,01 mm, insbesondere wenigstens 0,1 mm, und/oder wenigstens 1% eines minimalen Durchmessers dieses Stimmkörpers und/oder höchstens 10 mm, insbesondere höchstens 1 mm, und/oder höchstens 100% eines maximalen Durchmessers dieses Stimmkörpers, insbesondere bei 20°C.

Es hat sich überraschend herausgestellt, dass durch diese Parameter bzw. Grenzwerte jeweils bereits einzeln, insbesondere aber in Kombination von zwei oder mehr dieser Parameter bzw. Grenzwerte, eine besonders vorteilhafte Verstimmung von Eigenformen und -frequenzen bewirkt werden kann.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: eine Turbomaschinenschaufelanordnung einer Turbomaschinenstufe einer Turbomaschine nach einer Ausführung der vorliegenden Erfindung in perspektivischer auseinandergezogener Ansicht;
- Fig. 2: eine Draufsicht auf einer erste Turbomaschinenschaufel der Turboma-schinenschaufelanordnung in Umfangsrichtung;
- Fig. 3: einen Schnitt durch die Turbomaschinenschaufelanordnung längs der Linie C-C in Fig. 2;
- Fig. 4: einen Schnitt durch die Turbomaschinenschaufelanordnung längs der Linie L-L in Fig. 3; und
- Fig. 5: einen Schnitt durch die Turbomaschinenschaufelanordnung längs der Linie M-M in Fig. 3.

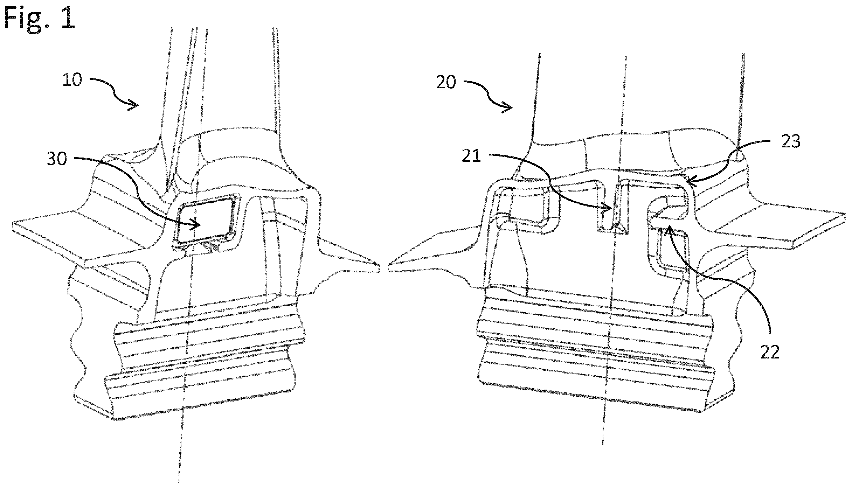

Fig. 1 zeigt eine Turbomaschinenschaufelanordnung einer Turbomaschinenstufe einer Turbomaschine nach einer Ausführung der vorliegenden Erfindung in perspektivischer Ansicht.

Die Turbomaschinenschaufelanordnung weist eine erste Turbomaschinenschaufel 10 und eine dieser (in Einbaulage) in Umfangsrichtung benachbarte zweite Turbomaschinenschaufel 20 auf, wobei die beiden Turbomaschinenschaufeln in Fig. 1 auseinandergezogen dargestellt sind, um ihre (in Einbaulage) benachbarten Stirnseiten zu zeigen.

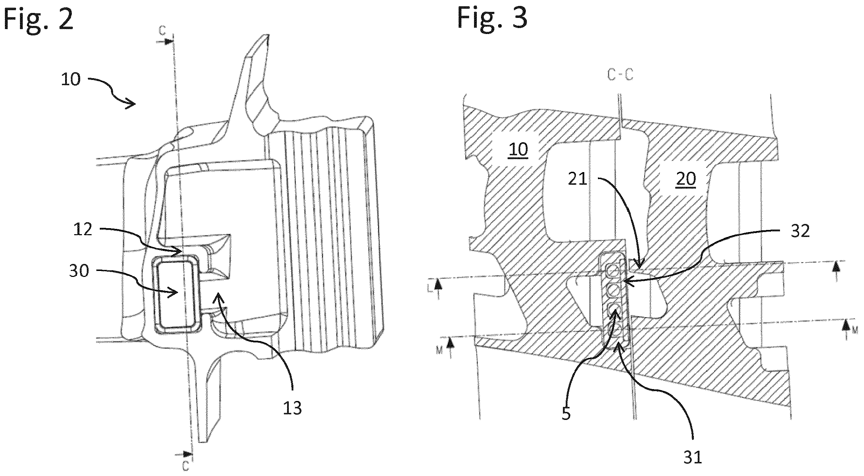

Die Turbomaschinenschaufelanordnung weist ein Stimmkörperführungsgehäuse 30 mit mehreren (im Ausführungsbeispiel acht) Hohlräumen auf, in denen jeweils ein kugelförmiger Stimm- bzw. Impulskörper 5 mit Bewegungsspiel zum Stoßkontakt mit dem Stimmkörperführungsgehäuse angeordnet ist (vgl. Fig. 3 - 5).

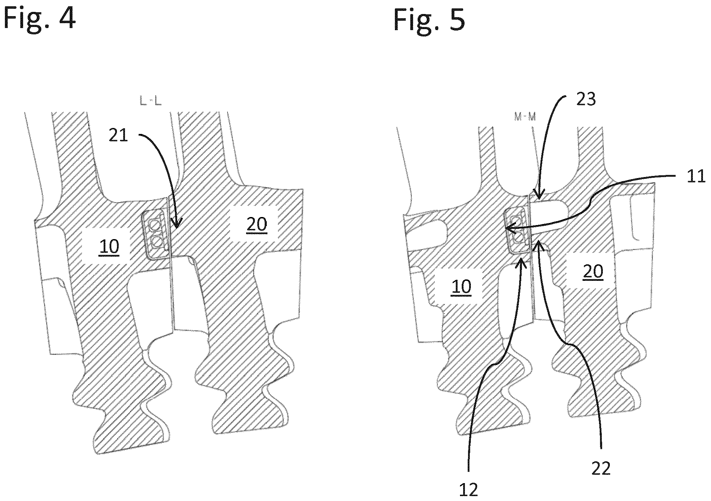

Das Stimmkörperführungsgehäuse 30 ist vollständig in einer stirnseitigen Aussparung 11 (vgl. Fig. 5) in einem Rahmen 12 (vgl. Fig. 2) der ersten Turbomaschinenschaufel 10 aufgenommen.

Das in der Aussparung 11 in dem Rahmen 12 aufgenommene Stimmkörperführungsgehäuse 30 ist darin mit translatorischem Bewegungsspiel in einer Einführ- bzw. Öffnungsrichtung in die bzw. der Aussparung 11 (senkrecht zur Zeichenebene der Fig. 2) aufgenommen, so dass es ohne die zweite Schaufel 20 aus diesem herausgezogen werden kann.

Die Aussparung 11 bzw. der Rahmen 12 weist einen Schlitz 13 auf (vgl. Fig. 2).

Die zweite Turbomaschinenschaufel 20 weist eine erste Rippe 21 und eine zweite Rippe 22 auf, die das in der Aussparung 11 angeordnete Stimmkörperführungsgehäuse 30 formschlüssig sichern, insbesondere ein Herausziehen entgegen der Einführrichtung aus der Aussparung formschlüssig verhindern und hierzu der Aussparung 11 bzw. dem darin angeordneten Stimmkörperführungsgehäuse 30 in Umfangsrichtung jeweils gegenüberliegen und diese(s) teilweise übergreifen.

Die beiden Rippen 21, 22 verhindert formschlüssig eine (Ver)Drehung des Stimmkörperführungsgehäuses aus der Aussparung 11 heraus.

Ein Winkel zwischen der gegen die erste Rippe geneigten zweiten Rippe 22 und der ersten Rippe beträgt etwa 90°.

Die erste Rippe 21 erstreckt sich im Wesentlichen in Radialrichtung, die zweite Rippe 22 entsprechend im Wesentlichen in Axialrichtung.

Hierdurch begrenzt die erste Rippe 21 insbesondere eine Verdrehung des Stimmkörperführungsgehäuses 30 in der Zeichenebene der Fig. 4, die erste und zweite Rippe 21, 22 insbesondere eine Verdrehung des Stimmkörperführungsgehäuses 30 in der Zeichenebene der Fig. 3.

Die erste und zweite Rippe sind im Wesentlichen gerade, voneinander beabstandet und mit einem Stirnflansch 23 der zweiten Turbomaschinenschaufel integral ausgebildet.

Die Aussparung 11 ist in einer schaufelfußseitigen Plattform auf einer Druckseite und auf einer Austritts- bzw. Abströmseite der ersten Turbomaschinenschaufel 10 angeordnet.

Das Stimmkörperführungsgehäuse 30 weist zwei Teile 31, 32 auf, die miteinanderluftdicht und stoffschlüssig verbunden sind und die Hohlräume definieren.

Obwohl in der vorhergehenden Beschreibung exemplarische Ausführungen erläutert wurden, sei darauf hingewiesen, dass eine Vielzahl von Abwandlungen möglich ist. Außerdem sei daraufhingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 10: erste Turbomaschinenschaufel
- 11: Aussparung
- 12: Rahmen
- 13: Schlitz
- 20: zweite Turbomaschinenschaufel
- 21: erste Rippe
- 22: zweite Rippe
- 23: Stirnflansch
- 30: Stimmkörperführungsgehäuse
- 31, 32: Stimmkörperführungsgehäuseteil
- 5: Stimmkörper

## Patentansprüche

1. Turbomaschinenschaufelanordnung mit einer ersten Turbomaschinenschaufel (10), einer dieser benachbarten zweiten Turbomaschinenschaufel (20) und wenigstens einem Stimmkörperführungsgehäuse (30) mit wenigstens einem Hohlraum, in dem wenigstens ein Stimmkörper (5) mit Bewegungsspiel zum Stoßkontakt mit dem Stimmkörperführungsgehäuse angeordnet ist, wobei das Stimmkörperführungsgehäuse wenigstens teilweise in einer Aussparung (11) der ersten Turbomaschinenschaufel (10) angeordnet ist,
**dadurch gekennzeichnet, dass**
die zweite Turbomaschinenschaufel (20) wenigstens eine erste Rippe (21) zum Sichern des in der Aussparung (11) angeordneten Stimmkörperführungsgehäuses (30) aufweist.

2. Turbomaschinenschaufelanordnung nach dem vorhergehenden Anspruch,
**dadurch gekennzeichnet, dass** die zweite Turbomaschinenschaufel (20) wenigstens eine zweite Rippe (22) zum Sichern des in der Aussparung (11) angeordneten Stimmkörperführungsgehäuses (30) aufweist.

3. Turbomaschinenschaufelanordnung nach dem vorhergehenden Anspruch,
**dadurch gekennzeichnet, dass** die zweite Rippe (22) gegen die erste Rippe (21) geneigt ist, wobei ein Winkel zwischen der ersten und zweiten Rippe insbesondere wenigstens 45° und/oder höchstens 135° beträgt.

4. Turbomaschinenschaufelanordnung nach einem der vorhergehenden Ansprüche,
**dadurch gekennzeichnet, dass** ein Winkel zwischen der ersten Rippe und einer Radial- oder Axialrichtung höchstens 30° beträgt.

5. Turbomaschinenschaufelanordnung nach einem der vorhergehenden Ansprüche,
**dadurch gekennzeichnet, dass** die erste und/oder zweite Rippe mit einem Stirnflansch (23) der zweiten Turbomaschinenschaufel (20) verbunden, insbesondere integral ausgebildet ist.

6. Turbomaschinenschaufelanordnung nach einem der vorhergehenden Ansprüche,
**dadurch gekennzeichnet, dass** die Aussparung (11) in einer schaufelfußseitigen Plattform und/oder auf einer Druck- und/oder Austrittsseite der ersten Turbomaschinenschaufel (10) angeordnet ist.

7. Turbomaschinenschaufelanordnung nach dem vorhergehenden Anspruch,
**dadurch gekennzeichnet, dass** das Stimmkörperführungsgehäuse (30) wenigstens zwei Teile (31, 32) aufweist, die miteinander, insbesondere luftdicht und/oder stoffschlüssig, verbunden sind und den Hohlraum definieren.

8. Turbomaschinenschaufelanordnung nach einem der vorhergehenden Ansprüche,
**dadurch gekennzeichnet, dass** wenigstens ein Stimmkörper (5) kugelförmig ausgebildet ist.

9. Turbomaschinenschaufelanordnung nach einem der vorhergehenden Ansprüche,
**dadurch gekennzeichnet, dass** in wenigstens einem Hohlraum des Stimmkörperführungsgehäuses (30) genau ein Stimmkörper (5) oder wenigstens zwei Stimmkörper angeordnet sind.

10. Turbomaschinenschaufelanordnung nach einem der vorhergehenden Ansprüche,
**dadurch gekennzeichnet, dass** wenigstens ein Stimmkörper (5) ungefesselt in einem Hohlraum angeordnet ist.

11. Turbomaschinenschaufelanordnung nach einem der vorhergehenden Ansprüche,
**dadurch gekennzeichnet, dass** wenigstens ein Stimmkörper (5) eine Masse aufweist, die wenigstens 0,01 g und/oder höchstens 0,05 g beträgt.

12. Turbomaschinenschaufelanordnung nach einem der vorhergehenden Ansprüche,
**dadurch gekennzeichnet, dass** wenigstens ein Stimmkörper (5) einen, insbesondere minimalen oder maximalen, Durchmesser aufweist, der wenigstens 1 mm und/oder höchstens 5 mm beträgt.

13. Turbomaschinenschaufelanordnung nach einem der vorhergehenden Ansprüche,
**dadurch gekennzeichnet, dass** das Bewegungsspiel wenigstens eines Stimmkörpers (5) wenigstens 0,01 mm und/oder wenigstens 1% eines minimalen Durchmessers des Stimmkörpers und/oder höchstens 10 mm und/oder höchstens 100% eines maximalen Durchmessers des Stimmkörpers beträgt.

14. Turbomaschinenstufe, insbesondere Verdichter- oder Turbinenstufe, mit wenigstens einer Turbomaschinenschaufelanordnung nach einem der vorhergehenden Ansprüche.

15. Turbomaschine, insbesondere Gasturbine, insbesondere Flugtriebwerk-Gasturbine, mit wenigstens einer Turbomaschinenstufe nach dem vorhergehenden Anspruch.

## Claims

1. Turbomachine blade arrangement with a first turbomachine blade (10), a second turbomachine blade (20) adjacent to said first turbomachine blade and at least one damping element guide housing (30) with at least one cavity in which at least one damping element (5) is arranged with play for an impact contact with the damping element guide housing, wherein the damping element guide housing is arranged at least partially in a recess (11) of the first turbomachine blade (10),
**characterized in that**
the second turbomachine blade (20) comprises at least one first rib (21) for securing the damping element guide housing (30) arranged in the recess (11).

2. Turbomachine blade arrangement according to the preceding claim, **characterized in that** the second turbomachine blade (20) comprises at least one second rib (22) for securing the damping element guide housing (30) arranged in the recess (11).

3. Turbomachine blade arrangement according to the preceding claim, **characterized in that** the second rib (22) is inclined towards the first rib (21), with an angle between the first and the second rib being in particular at least 45° and/or at most 135°.

4. Turbomachine blade arrangement according to any of the preceding claims, **characterized in that** an angle between the first rib and a radial or axial direction is at most 30°.

5. Turbomachine blade arrangement according to any of the preceding claims, **characterized in that** the first and/or second rib is connected, in particularformed integrally to an end flange (23) of the second turbomachine blade (20).

6. Turbomachine blade arrangement according to any of the preceding claims, **characterized in that** the recess (11) is arranged in a platform on the blade root side and/or on a pressure and/or outlet side of the first turbomachine blade (10).

7. Turbomachine blade arrangement according to the preceding claim, **characterized in that** the damping element body guide housing (30) comprises at least two parts (31, 32) which are connected to one another, in particular in an airtight and/or positive manner, and which define the cavity.

8. Turbomachine blade arrangement according to any of the preceding claims, **characterized in that** at least one damping element (5) is spherical.

9. Turbomachine blade arrangement according to any of the preceding claims, **characterized in that** exactly one damping element (5) or at least two damping elements are arranged in at least one cavity of the damping element guide housing (30).

10. Turbomachine blade arrangement according to any of the preceding claims, **characterized in that** at least one damping element (5) is arranged in a cavity without being fettered.

11. Turbomachine blade arrangement according to any of the preceding claims, **characterized in that** at least one damping element (5) has a mass which is at least 0.01 g and/or at most 0.05 g.

12. Turbomachine blade arrangement according to any of the preceding claims, **characterized in that** at least one damping element (5) comprises a, in particular minimum or maximum, diameter which is at least 1 mm and/or at most 5 mm.

13. Turbomachine blade arrangement according to any of the preceding claims, **characterized in that** the movement play of at least one damping element (5) is at least 0.01 mm and/or at least 1% of a minimum diameter of the damping element and/or at most 10 mm and/or at most 100% of a maximum diameter of the damping element.

14. Turbomachine stage, in particular the compressor or turbine stage, with at least one turbomachine blade arrangement according to any of the preceding claims.

15. Turbomachine, in particular gas turbine, in particular aircraft engine gas turbine, with at least one turbomachine stage according to the preceding claim.

## Revendications

1. Agencement d'aubes de turbomachine comportant une première aube de turbomachine (10), une seconde aube de turbomachine (20) adjacente à ladite première aube de turbomachine, et au moins un carter de guidage d'élément d'amortissement (30) présentant au moins une cavité dans laquelle est disposé au moins un élément d'amortissement (5) comportant un jeu de mouvement permettant un contact d'impact avec le carter de g uidage d'élément d'amortissement, le carter de guidage d'élément d'amortissement étant disposé au moins partiellement dans un évidement (11) de la première aube de turbomachine (10),
**caractérisé en ce que**
la seconde aube de turbomachine (20) présente au moins une première nervure (21) permettant la fixation du carter de guidage d'élément d'amortissement (30) disposé dans l'évidement (11).

2. Agencement d'aubes de turbomachine selon la revendication précédente, **caractérisé en ce que** la seconde aube de turbomachine (20) présente au moins une seconde nervure (22) permettant la fixation du carter de guidage d'élément d'amortissement (30) disposé dans l'évidement (11).

3. Agencement d'aubes de turbomachine selon la revendication précédente, **caractérisé en ce que** la seconde nervure (22) est inclinée contre la première nervure (21), un angle entre la première nervure et la seconde nervure étant en particulier d'au moins 45° et/ou d'au plus 135°.

4. Agencement d'aubes de turbomachine selon l'une des revendications précédentes, **caractérisé en ce qu'**un angle entre la première nervure et une direction radiale ou axiale est d'au plus 30°.

5. Agencement d'aubes de turbomachine selon l'une des revendications précédentes, **caractérisé en ce que** la première et/ou la seconde nervures sont reliées à une bride frontale (23) de la seconde aube de turbomachine (20), en particulier sont formées d'un seul tenant.

6. Agencement d'aubes de turbomachine selon l'une des revendications précédentes, **caractérisé en ce que** l'évidement (11) est disposé dans une plateforme du côté de pied d'aube et/ou sur un côté de pression et/ou de sortie de la première aube de turbomachine (10).

7. Agencement d'aubes de turbomachine selon la revendication précédente, **caractérisé en ce que** le carterde guidage d'élément d'amortissement (30) présente au moins deux parties (31, 32) qui sont reliées l'une à l'autre, en particulier de manière étanche et/ou par liaison de matière, et qui définissent la cavité.

8. Agencement d'aubes de turbomachine selon l'une des revendications précédentes, **caractérisé en ce qu'**au moins un élément d'amortissement (5) est sphérique.

9. Agencement d'aubes de turbomachine selon l'une des revendications précédentes, **caractérisé en ce qu'**exactement un élément d'amortissement (5) ou au moins deuxéléments d'amortissement sont disposés dans au moins une cavité du carter de guidage d'élément d'amortissement (30).

10. Agencement d'aubes de turbomachine selon l'une des revendications précédentes, **caractérisé en ce qu'**au moins un élément d'amortissement (5) est disposé dans une cavité de manière non attachée.

11. Agencement d'aubes de turbomachine selon l'une des revendications précédentes, **caractérisé en ce qu'**au moins un élément d'amortissement (5) présente une masse qui est d'au moins 0,01 g et/ou de 0,05 g au maximum.

12. Agencement d'aubes de turbomachine selon l'une des revendications précédentes, **caractérisé en ce qu'**au moins un élément d'amortissement (5) présente un diamètre, en particulier minimal ou maximal, qui est d'au moins 1 mm et/ou de 5 mm au maximum.

13. Agencement d'aubes de turbomachine selon l'une des revendications précédentes, **caractérisé en ce que** le jeu de mouvement d'au moins un élément d'amortissement (5) est d'au moins 0,01 mm et/ou d'au moins 1 % d'un diamètre minimal de l'élément d'amortissement et/ou de 10 mm au maximum et/ou de 100 % au maximum d'un diamètre maximal de l'élément d'amortissement.

14. Étage de turbomachine, en particulier étage de compresseurou de turbine, comportant au moins un agencement d'aubes de turbomachine selon l'une des revendications précédentes.

15. Turbomachine, en particulierturbine à gaz, en particulier turbine à gaz de moteur d'aéronef, comportant au moins un étage de turbomachine selon la revendication précédente.
